# EUROPEAN PATENT SPECIFICATION

(11) **EP 2 797 843 B1**
(45) Date of publication and mention of the grant of the patent: **05.12.2018**
(21) Application number: 11879110.2
(22) Date of filing: 30.12.2011
(51) Int. Cl.: C01G 45/00, C01G 51/00, C01G 53/00, H01M 4/505

(54) **CATHODE COMPRISING LITHIUM-METAL OXIDE NANOFARTICLES**
KATHODE ENTHALTEND LITHIUM-METALLOXIDNANOTEILCHEN
CATHODE COMPRENANT NANOPARTICULES D'OXYDE DE LITHIUM ET DE MÉTAL

(43) Date of publication of application: 05.11.2014
(73) Proprietor: Robert Bosch GmbH, 70442 Stuttgart (DE)
(72) Inventor: XIA, Yongyao, Shanghai 200438 (CN); LIU, Jinlong, Shanghai 200438 (CN); WANG, Yonggang, Shanghai 200438 (CN); JIANG, Rongrong, Shanghai 200335 (CN); DOU, Yuqian, Shanghai 200335 (CN); ZHOU, Longjie, Shanghai 200335 (CN)
(86) International application number: PCT/CN2011/085045
(87) International publication number: WO 2013/097186

(56) References cited:
- WO-A1-2011/078389
- WO-A1-2012/032709
- CN-A- 101 707 252
- CN-A- 101 867 039
- CN-A- 102 055 012
- CN-A- 102 237 516
- CN-A- 102 255 069
- JP-A- 2001 192 210
- JP-A- 2008 105 912
- JP-A- 2008 270 201
- US-A1- 2011 244 324
- NAOAKI YABUUCHI ET AL: "Detailed Studies of a High-Capacity Electrode Material for Rechargeable Batteries, Li 2 MnO 3 -LiCo 1/3 Ni 1/3 Mn 1/3 O 2", JOURNAL OF THE AMERICAN CHEMICAL SOCIETY, vol. 133, no. 12, 30 March 2011 (2011-03-30), pages 4404-4419, XP055052026, ISSN: 0002-7863, DOI: 10.1021/ja108588y
- SUN-HO KANG ET AL: "Enhancing the rate capability of high capacity xLi2MnO3.(1-x)LiMO2 (M=Mn, Ni, Co) electrodes by Li-Ni-PO4 treatment", ELECTROCHEMISTRY COMMUNICATIONS, vol. 11, no. 4, 1 April 2009 (2009-04-01), pages 748-751, XP055045786, ISSN: 1388-2481, DOI: 10.1016/j.elecom.2009.01.025

## Description

### FIELD OF THE INVENTION

The present invention relates to lithium-metal oxide nanoparticles having a general formula of xLi₂MnO₃·(1-x)LiNiyCo_{z}Mn_{1-y-z}O₂, as cathode materials for lithium ion batteries.

### BACKGROUND OF THE INVENTION

Lithium-metal oxide compound of the general formula LiMO₂, where M is a trivalent transition metal such as Co, Ni or/and Mn, is of interest as cathode material for lithium-ion battery. The best well-known cathode material is LiCoO₂, which is however relatively expensive compared to the isostructual nickel and manganese-based compounds. Efforts have therefore been made to develop less costly cathode materials, for example, by partially substituting the cobalt ions within LiCoO₂ by nickel or manganese.

WO 2011/078389 A1 discloses a method for producing a composite oxide whose major component is a lithium-manganese-system oxide.

US 6,680,143 B2 describes a lithium metal oxide positive electrode having a general formula xLiMO₂· (1-x)Li₂MO₃ (0<x<1) where M is one or more ions with an average trivalent oxidation state with at least ion being Mn or Ni, and M' is one or more ions with an average tetravalent oxidation state. The lithium metal oxide however has a relatively poor crystal structure. The lithium-metal oxide compound has the following problems: (1) a low coulombic efficiency of the first cycle ascribable to large irreversible capacity loss; (2) a poor rate capability caused by kinetic problems; (3) a rapid capacity fading during cycles.

Therefore, there remains a need for a lithium-metal oxide compound as cathode material for a lithium ion battery, which overcomes the above-mentioned shortcomings, while having high energy density, excellent thermal stability and low cost.

### SUMMARY OF THE INVENTION

The present invention provides a cathode material for a lithium ion battery according to the features of independent claim 1.

### BRIEF DESCRIPTION OF THE DRAWINGS

These and/or other aspects and advantages of the invention will become apparent and more readily appreciated from the following description of the invention, taken in conjunction with the accompanying drawings, in which,
Fig. 1 is a graph showing X-ray diffraction pattern of Li_{1.2}Mn_{0.54}Ni_{0.13}Co_{0.13}O₂ prepared according to Example 2.
Fig. 2 is a graph showing X-ray diffraction pattern of Li_{1.2}Mn_{0.54}Ni_{0.13}Co_{0.13}O₂ prepared according to Comparative Example 1.
Fig. 3 is SEM image of Li_{1.2}Mn_{0.54}Ni_{0.13}Co_{0.13}O₂ prepared according to Example 2.
Fig. 4 is SEM image of Li_{1.2}Mn_{0.54}Ni_{0.13}Co_{0.13}O₂ prepared according to Comparative Example 1.
Fig. 5 shows the typical voltage vs. capacities curve of Li_{1.2}Mn_{0.54}Ni_{0.13}Co_{0.13}O₂ prepared according to Example 2.
Fig. 6 shows the rate performance of Li_{1.2}Mn_{0.54}Ni_{0.13}Co_{0.13}O₂ prepared according to Example 2 at various rates.

### DETAILED DESCRIPTION OF THE PRERRED EMBODIMENTS

According to the invention, the lithium-metal oxide nanoparticles have a general formula and primary particle size range as defined in claim 1.

The nanoparticles can be prepared by a molten-salt method according to the invention, comprising reacting a mixture including transition metal compounds of manganese (Mn), nickel (Ni) and cobalt (Co), and a lithium compound in a molten salt.

As precursors of the transition metals, the transition metal compounds are selected from the group consisting of transition metal oxides and transition metal salts. Exemplary transition metal salts include, but are not limited to, carbonate, nitrate, acetate, oxalate, hydrate and sulfate.

As lithium precursor, the lithium compound is selected from the group consisting of lithium oxides and lithium salts. Examplary lithium salts include, but are not limited to, lithium carbonate, lithium hydroxide, lithium nitrate and lithium sulfate.

The molten-salt method is based on the use of a salt with a low melting point as a reaction medium. The salt is not particularly restricted. Examples of the salt include, but are not limited to, lithium carbonate, lithium hydroxide, lithium nitrate, lithium chloride, sodium chloride, potassium chloride, magnesium chloride, calcium chloride, barium chloride, sodium nitrate, and potassium nitrate. Preferably, potassium chloride, lithium nitrate, and lithium chloride are used as the salt.

The reaction can be carried out by mixing stoichiometric amounts of the transition metal compounds and the lithium compound, grinding the mixed compounds with an excess of the salt as described above used as a reaction medium, and heating the mixture at a temperature of from 600°C to 1000°C, under an oxygen-containing atmosphere, for example, under a flow of air or oxygen gas, for a period of from 1h to 48h.

It has been found that the amount of the molten salt used as a reaction medium in the method may influence the formation of the nanoparticles. As the amount of the molten salt increases, the average particle size becomes small. In the method according to the invention, the salt can be suitably used in a molar ratio to the total transition metals (MS/TM) of from 2 to

The obtained product is then cooled, for example by liquid nitrogen quenching. After cooling, the product is washed to remove residual molten-salt, and then dried.

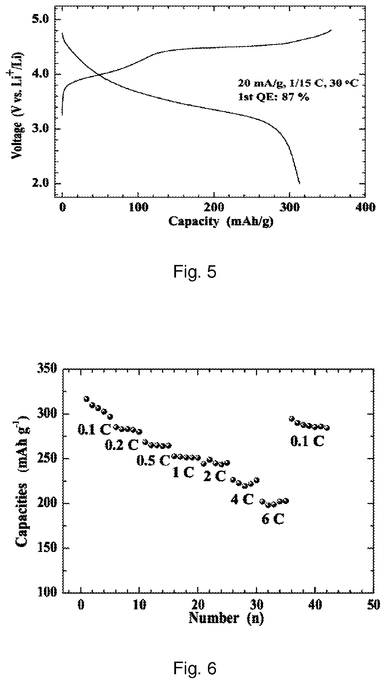

By method according to the invention, the crystallinity can be obtained. The obtained nanoparticles show improved specific capacity, rate capability, and coulombic efficienty at the first cycle, as illustrated in Figs. 5 and 6. The nanoparticles can be advantageously used as cathode materials for lithium-ion batteries.

The following examples further illustrate the preparation of the nanoparticles by the molten-salt method according to the invention, and the characteristics of the prepared nanoparticles used as cathode material for lithium-ion battery. The examples are given by way of illustration only, and are not intended to limit the invention in any manner.

### Example 1: Preparation of xLi₂MnO₃·(1-x)LiNi_{y}Co_{z}Mn_{1-y-z}O₂ powder (x=0.5; y=1/3; z=1/3) (not according to the invention)

A stoichiometric amount of lithium nitrate, Ni, Mn and Co oxides were thoroughly mixed. The mixed precursors were ground with a large excess of lithium nitrate salt (LiNO₃) of which the molar ratio for the total transition metals (MS/TM) was 4. The mixture of LiNO₃ salt and the precursors was put in an alumina crucible and heated at 950°C in air for 6 h. The powder having a particle size of 400-500nm was obtained after liquid nitrogen quenching.

### Example 2: Preparation of xLi₂MnO₃·(1-x)LiNi_{y}Co_{z}Mn_{1-y-z}O₂ powder (x=0.5; y=1/3; z=1/3)

The powder precursors were synthesized using a stoichiometric amount of LiOH, Ni, Mn and Co oxides which were thoroughly mixed. The mixed precursors were ground with potassium chloride salt (KCI) of which the molar ratio for the total transition metals (MS/TM) was 32. The mixture was put in an alumina crucible and heated at 800°C in air for 12 h. The powder having a particle size of 100-200nm was obtained after liquid nitrogen quenching.

### Example 3: Preparation of xLi₂MnO₃·(1-x)LiNi_{y}Co_{z}Mn_{1-y-z}O₂ powder (x=0.3; y=1/3; z=1/3) (not according to the invention)

A stoichiometric amount of lithium chloride, Ni, Mn and Co oxides were thoroughly mixed. The mixed precursors were ground with a large excess of lithium chloride salt (LiCI) of which the molar ratio for the total transition metals (MS/TM) was 4. The mixture of LiCI salt and the precursors was put in an alumina crucible and heated at 650°C in air for 12 h. The powder having a particle size of 50-200nm was obtained after cooling to room temperature.

### Comparative Example 1: Preparation of xLi₂MnO₃·(1-x)LiNi_{y}Co_{z}Mn_{1-y-z}O₂ powder (x=0.5; y=1/3; z=1/3) by a solid-state reaction process

The powder precursors were synthesized using a stoichiometric amount of Li₂CO₃, Ni, Mn and Co oxides which were thoroughly mixed. The mixture was put in an alumina crucible and heated 12 h. The powder having a particle size of after liquid nitrogen quenching.

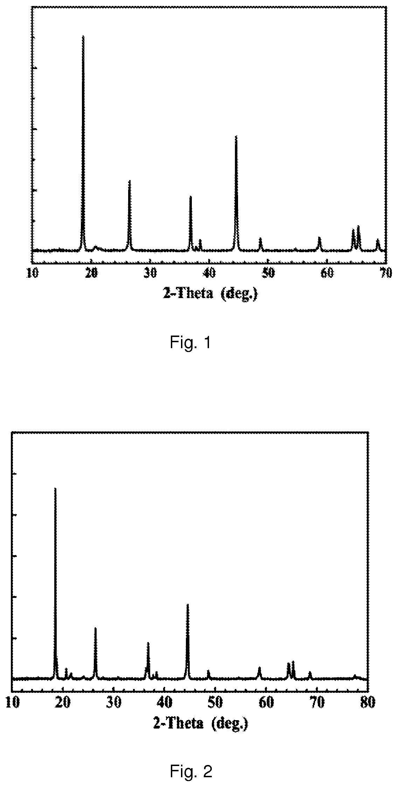

The chemical composition and crystalline phase of the powders prepared according to Example 2 and according to Comparative Example 1 were determined by X-ray diffraction (XRD) measurement. The XRD pattern of the powder prepared according to Example 2, as shown in Fig. 1, indicates an essentially single-phase product. In contrast, the XRD pattern of the powder prepared according to Comparative Example 1, as shown in Fig. 2, indicates a mixed-phase product. From the XRD pattern as shown in Fig. 1, the chemical composition of the powder prepared according to Example 2 was indexed to be α-NaFeO₂ type structure, space group R3m.

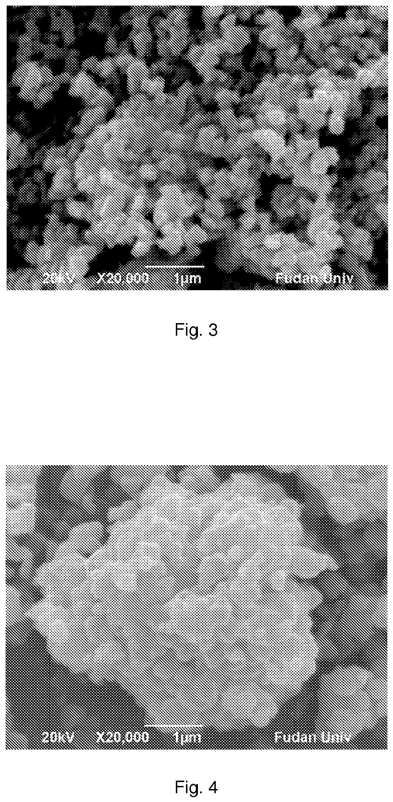

The particle morphology of the powders was observed by a scanning electron microscopy (SEM). Fig. 3 shows the SEM image of the powder prepared according to Example 2. From the SEM image, it can be seen that discrete nanoparticles having a particle size of 100-200nm were obtained by the molten-salt method according to the invention. In contrast, Fig. 4 shows the SEM image of the powder prepared according to Comparative Example 1. From the SEM image, severe agglomeration was observed, and the powder having a particle size of from 400nm to 1µm was obtained by the solid-state reaction process.

### Cell assembling and electrochemical tests:

The cathode consisted of the following active materials: xLi₂MnO₃·(1-x)LiNi_{y}Co_{z}Mn_{1-y-z}O₂ powder prepared according to Example 2, carbon black and polyvinylidene fluoride (PVDF) (with a weight ratio of 80∼94 : 10∼3 : 10∼3). Then, a solvent, N-methyl-2-pyrrolidone (NMP), was added to these active materials, forming a slurry. The slurry was then uniformly coated on an aluminum foil, dried at 100 °C under vacuum for 10 h, pressed and cut into 12 mm cathode discs. Coin cells (CR2016) were assembled using metallic Li as the counter electrode, Celgard 2400 as the separator, and 1mol l⁻¹ LiPF₆ as the electrolyte, in an Ar-filled glove box. The cycling performances of the cells were evaluated by using a Land CT2001A battery tester between 2.0V and 4.8V versus Li/Li⁺. The test results are shown in Figs. 5 and 6.

As shown in Figs. 5 and 6, the nanoparticles according to the invention deliver a capacity of about 300 mAh g⁻¹ at room temperature at the current density of 20 mA/g with 89% coulombic efficiency at the first cycle. When discharged at 6C, the Li_{1.2}Mn_{0.54}Ni_{0.13}Co_{0.13}O₂ nanoparticles show a capacity of 200 mAh g⁻¹.

## Claims

1. A cathode for a lithium ion battery comprising
lithium-metal oxide nanoparticles, carbon black and polyvinylindene fluoride with a weight ratio of (80-94) : (10-3) : (10-3),
wherein the lithium-metal oxide nanoparticles having a general formula:
xLi₂MnO₃ · (1-x)LiNi_{y}Co_{z}Mn_{(1-y-z)}O₂, where x = 0.5, y = 1/3, z = 1/3, and
wherein the nanoparticles have a primary particle size ranging from 100nm to 200nm.

2. A lithium ion battery comprising the cathode according to claim 1.

## Patentansprüche

1. Kathode für eine Lithiumionenbatterie, umfassend Lithiummetalloxid-Nanoteilchen, Ruß und Polyvinylidenfluorid mit einem Gewichtsverhältnis von (80-94) : (10-3) : (10-3),
wobei die Lithiummetalloxid-Nanoteilchen die folgende allgemeine Formel aufweisen:
xLi₂MnO₃ · (1-x)LiNi_{y}Co_{z}Mn_{(1-y-z)}O₂, wobei x = 0,5, y = 1/3, z = 1/3, und
wobei die Nanoteilchen eine Primärteilchengröße im Bereich von 100 nm bis 200 nm aufweisen.

2. Lithiumionenbatterie mit der Kathode nach Anspruch 1.

## Revendications

1. Cathode pour une batterie au lithium-ion comprenant
des nanoparticules d'oxyde de métal-lithium, du noir de carbone et du poly(fluorure de vinylidène) selon un rapport pondéral de (80 à 94) : (10 à 3) : (10 à 3),
les nanoparticules d'oxyde de métal-lithium présentant la formule générale :
xLi₂MnO₃ · (1-x)LiNi_{y}Co_{z}Mr_{(1-y-z)}O₂, où x = 0,5, y = 1/3, z = 1/3, et
les nanoparticules présentant une taille de particule primaire se situant dans la plage de 100 nm à 200 nm.

2. Batterie au lithium-ion comprenant la cathode selon la revendication 1.
